# EUROPÄISCHE PATENTSCHRIFT

(11) **EP 0 412 320 B1**
(45) Veröffentlichungstag und Bekanntmachung des Hinweises auf die Patenterteilung: **30.11.1994**
(21) Anmeldenummer: 90113585.5
(22) Anmeldetag: 16.07.1990
(51) Int. Cl.: H04L 1/22

(54) **Verfahren zum Übertragen von Daten mittels Impulstelegrammen zwischen Teilnehmerstellen einer Fernwirkeinrichtung und Schaltungsanordnung zur Durchführung des Verfahrens**
Method of data transmission by means of impulse telegrams between telecontrol equipment subscriber stations, and device for carrying out the method
Méthode de transmission de données au moyen de télégrammes d'impulsions entre des postes d'abonnés d'un dispositif de télétraitement et circuit pour mettre en oeuvre la méthode

(30) Priorität: 07.08.1989 EP 89114578
(43) Veröffentlichungstag der Anmeldung: 13.02.1991
(73) Patentinhaber: SIEMENS AKTIENGESELLSCHAFT, 80333 München (DE)
(72) Erfinder: Becker, Wolfgang, Dipl.-Ing. (FH), D-8000 München 70 (DE); Lang, Otto, Dipl.-Ing. (FH), D-8000 München 45 (DE); Plachetka, Jürgen, Dipl.-Ing., D-8039 Puchheim (DE); Rosner, Sönke, Dipl.-Ing. (FH), D-8000 München 90 (DE); Timmermann, Uwe, Dipl.-Ing. (FH), D-8000 München 71 (DE)

(56) Entgegenhaltungen:
- DE-A- 2 629 499
- DE-A- 3 145 893
- DE-A- 3 800 977
- TELCOM REPORT, Band 8, Nr. 3, Mai/Juni 1985, Seiten 208-213; K. SPIESS et al.:"Erhöhte Betriebssicherheit von 2-Mbit/s-Übertragungsstrecken"

## Beschreibung

Die Erfindung bezieht sich auf ein wie im Oberbegriff des Anspruchs 1 angegebenes Verfahren und eine Schaltungsanordnung zur Durchführung des Verfahrens.

Eine Signalsammeleinrichtung mit einer Anordnung zur Abfrage von Signalgebern mittels einer zentralen Abfrageeinrichtung, die die Signalgeber zyklisch aufruft, ist bereits aus der DE-OS 34 36 414 bekannt. Die bekannte Anordnung ist für eine zentrale Betriebsbeobachtung von Übertragungseinrichtungen ausgebildet und besonders für Einrichtungen zur automatischen Betriebsführung von Weitverkehrsanlagen geeignet. Die Signale werden seriell und zwar bit- oder byteweise als Impulsfolgen einem Rechner übergeben.

Werden aus derartigen Signalen bestehende Daten von einer Betriebsstelle zu einer anderen übertragen, so kann es sich im Hinblick auf die Bedeutung der Signale für die zentrale Betriebsbeobachtung als zweckmäßig erweisen, die Signale über zwei Übertragungsstrecken zu übertragen und auf der Empfangsseite eine dieser beiden Übertragungsstrecken für die Weiterleitung oder Verarbeitung der empfangenen Signale auszuwählen.

Eine Anordnung zur Auswahl von zwei das gleiche Digitalsignal führenden Übertragungsstrecken, bei der empfangsseitig eine Auswahl einer von zwei das gleiche Signal führenden Übertragungsstrecken vorgesehen ist, ist bereits aus der DE-OS 26 29 499 bekannt. Bei der bekannten Anordnung ist an jeder Übertragungsstrecke eine erste Meldeeinrichtung für ein Überschreiten einer definierten Bitfehlerquote, eine zweite Meldeeinrichtung für ein AIS-Signal (Alarm-Indication-Signal) und eine dritte Meldeeinrichtung für Digital-Signal-Ausfall vorgesehen. Ein Umschalter verbindet die ausgewählte Übertragungsstrecke mit einem Ausgang. Eine von den Meldeeinrichtungen gesteuerte Logik steuert den Umschalter.

Ferner ist aus telcom report, Band 8, Nr. 3, Mai/Juni 1985 Seiten 208 bis 213; K. Spiess et al.: "Erhöhte Betriebssicherheit von 2-Mbit/s-Übertragungsstrecken" eine Anordnung zur Auswahl von zwei das gleiche Digitalsignal führenden Übertragungsstrecken bekannt, bei der empfangsseitig eine Auswahl einer der beiden Übertragungsstrecken vorgesehen ist. Bei der bekannten Anordnung ist an jeder Übertagungsstrecke eine erste Überwachungseinrichtung für ein AIS-Signal (Alarm Indication Signal) und eine zweite Überwachungseinrichtung für einen Digital-Signal-Ausfall (kein Digitalsignal bzw. KDS) vorgesehen. Diese Überwachungseinrichtungen sind den Empfängern der Übertragungseinrichtung zugeordnet. Eine von den Meldeeinrichtungen gesteuerte Steuerlogik verknüpft die AIS- und KDS-Signale und steuert einen Umschalter.

Bei der Verwendung einer derartigen Anordnung könnte die Zuverlässigkeit der Datenübertragung zwischen Signalsammlern eine Signalsammeleinrichtung gegenüber der Übertragung über einen einzigen Übertragungskanal wesentlich erhöht werden. Ausgehend von dem bekannten OSI-Modell würden dabei Qualitätskriterien der Schicht 1 gewonnen und für die Auswahl der jeweils besseren Übertragungsstrecke verwendet.

Überlegungen im Rahmen der Erfindung haben ergeben, daß sich eine weitere Erhöhung der Verfügbarkeit bzw. der Übertragungsqualität dadurch erreichen läßt, daß für die Auswahl des jeweils geeigneteren Übertragungskanals zusätzlich Qualitätskriterien aus der Schicht 2 des OSI-Models gewonnen und verwertet werden.

Aus der DE-A-3 800 977 ist bereits ein Digitalsignal-Übertragungssystem mit Linienersatzbetrieb bekannt, bei dem eine empfangsseitige Einrichtung mit einer sendeseitigen Einrichtung über einen ersten und einen zweiten Übertragungsweg verbunden ist. Das von einer Datenquelle gelieferte Datensignal wird in jedem Sender in Datenblöcke gegliedert. An jeden Datenblock wird mindestens ein Prüfbit angefügt. Das so ergänzte Digitalsignal gelangt in den zugehörigen Empfänger. In jedem Empfänger befindet sich eine Fehlerprüfeinrichtung, die ein Fehlersignal abgibt, wenn im zugehörigen Datenblock ein Bitfehler aufgetreten ist. Eine Steuervorrichtung steuert den Umschalter so, daß bei Auftreten eines Fehlersignals auf den anderen Übertragungsweg umgeschaltet wird. Bei einem derartigen Digitalsignal-Übertragungssystem werden lediglich Qualitätskriterien aus der Schicht 2 des OSI-Modells gewonnen und verwertet.

Aufgabe der Erfindung ist es, ein Verfahren zum Übertragen von Daten mittels Impulstelegrammen zwischen Teilnehmerstellen einer Fernwirkeinrichtung anzugeben, das eine möglichst zuverlässige Übertragung der Daten gewährleistet und für verschiedenartige digitale Übertragungskanäle geeeignet ist.

Ausgehend von einem Verfahren der eingangs genannten Art wird die gestellte Aufgabe durch die im kennzeichnenden Teil des Patentanspruchs 1 angegebenen Verfahrensschritte gelöst. Die Auswahl eines der beiden Empfangssignale kann mit Hilfe eines dem Mikrocomputersystem vorgeschalteten Umschalters oder im Mikrocomputersystem selbst vorgenommen werden. Die Teilnehmerstellen der Fernwirkeinrichtung sind insbesondere Signalsammler oder Alarmsammler einer Signal- bzw. Alarmsammeleinrichtung.

Durch die erfindungsgemäßen Maßnahmen ergibt sich in vorteilhafter Weise eine besonders sichere Übertragung der zwischen den Teilnehmerstellen auszutauschenden Informationen, ohne daß hierzu ein nennenswerter zusätzlicher Aufwand an Schaltungsmitteln erforderlich ist. Ein weiterer wesentlicher Vorteil besteht darin, daß sich das Verfahren leicht an verschiedenartige Übertragungsstrecken anpassen läßt und vergleichsweise geringe Anforderungen an die Überwachungsmöglichkeiten der betreffenden Übertragungsstrecke selbst stellt.

Bei der Weiterbildung des Verfahrens nach Anspruch 2 werden die Informationen über den Zustand wenigstens der ausgewählten Übertragungsstrecke und wenigstens ein Zeitkriterium miteinander verknüpft. Die Ausfallkriterien der Schicht 1 werden sofort oder nach einer vorgegebenen Pufferzeit wirksam, um einen eindeutig gesicherten Störungszustand gewinnen zu können und so bei kurzzeitigen Störungen ein Umschalten zu vermeiden.

In der Schicht 2 werden Qualitätskriterien gewonnen. Ein derartiges Kriterium kann das Verhältnis der Zahl der gestörten Telegramme zur Gesamtzahl der Telegramme in einer vorgegebenen Zeitspanne sein. Nach Integration bzw. Sammeln der Meldungen und Überschreiten eines vorgegebenen Grenzwertes wird jeweils ein Überwachungssignal gebildet. Dieses Überwachungssignal löst ein Umschaltsignal zu einem Zeitpunkt aus, der eine Umschaltung in der Pause zwischen zwei Telegrammen sicherstellt.

Eine zweckmäßige Schaltungsanordnung zur Durchführung des Verfahrens geht aus Anspruch 3 hervor.

Vorteilhafte Ausgestaltungen der Schaltungsanordnung nach Anspruch 3 sind in den Ansprüchen 4 bis 12 angegeben.

Bei der Weiterbildung der Schaltungsanordnung nach Anspruch 4 sind zweckmäßigerweise in Verbindung mit einer Auswahl des Empfangssignals durch ein dem Mikrocomputersystem vorgeschalteten Umschalter ein Dateneingang und bei Auswahl im Mikrocomputersystem selbst zwei Dateneingänge vorgesehen.

Nach Anspruch 4 erfolgt die Übertragung der Daten mittels des HDLC-Protokolls. Insbesondere sind dabei die Daten für das HDLC-Protokoll im NRZI-Format codiert. Auf den Übertragungskanälen werden im Ruhezustand, d.h. zwischen den Telegrammen, zweckmäßigerweise Dauer-Flags gesendet.

Die Maßnahmen nach Anspruch 5 haben den Vorteil, daß die Überwachungseigenschaften des HDLC-Controllers mit zur Gewinnung des Umschaltkriteriums herangezogen werden.

In den Ansprüchen 5 und 6 sind für zwei bevorzugte Arten von Übertragungsstrecken die jeweils bevorzugten Überwachungssignale der OSI-Schicht 1 angegeben.

Da das erfindungsgemäße Verfahren für verschiedenartige digitale Übertragungsstrecken geeignet ist, ist es entsprechend Anspruch 8 in vorteilhafter Weise möglich, für eine Anschaltung der Signalsender an verschiedenartige Übertragungskanäle eine die Schaltungsanordnung enthaltende Baueinheit so auszubilden, daß sie in ihrem Grundaufbau gleich und insbesondere hinsichtlich der Sender und Empfänger wahlweise bestückbar ist.

Insbesondere besitzen die Signalsammler wahlweise eine Zwei-Wege-Anschaltung für die G.703-Schnittstelle nach CCITT für 64 Kbit/s oder für die V.11-Schnittstelle nach CCITT.

Eine zweckmäßige Art der Auswahl der jeweils geeigneteren Übertragungsstrecke geht aus Anspruch 9 hervor.

Eine vorteilhafte Gewinnung und Weiterleitung von Überwachungs daten der Schicht 2 ist in Anspruch 10 angegeben.

Bei der Weiterbildung nach Anspruch 11 wird auf der Empfangsseite jeweils in einer Lücke zwischen zwei Impulstelegrammen von einer Übertragungsstrecke auf die andere umgeschaltet. Aus einem Vergleich der im Mikrocomputersystem für die beiden Übertragungsstrecken gewonnenen Überwachungssignale der Schicht 2 läßt sich dabei die jeweils geeignetere Übertragungsstrecke auswählen.

Mit den Maßnahmen nach Anspruch 12 läßt sich dies erreichen, ohne daß ein Umschalter erforderlich ist.

Zweckmäßigerweise wird auf der Empfangsseite nur dann von einem auf den anderen Übertragungskanal umgeschaltet, wenn für den anderen Übertragungskanal keine Störungsmeldungen der Schicht 1 vorliegen.

Die periodische Umschaltung findet daher nur dann statt, wenn für beide Übertragungskanäle keine Störungsmeldungen der Schicht 1 vorliegen.

Wird in der Schicht 2 eine vergleichsweise schlechte Qualität eines der Übertragungskanäle festgestellt, wird dies zweckmäßigerweise in größeren Zeitabständen überprüft.

Die Erfindung wird anhand der in den Figuren dargestellten Ausführungsbeispiele näher erläutert.

Es zeigen
- Fig. 1: eine Schaltungsanordnung zum Übertragen von Daten mittels Impulstelegrammen zwischen Signalsammlern einer Signalsammeleinrichtung mit Auswahl der empfangenen Daten durch einen Umschalter,
- Fig. 2: eine Schaltungsanordnung zum Übertragen von Daten mittels Impulstelegrammen zwischen Signalsammlern einer Signalsammeleinrichtung mit Auswahl der empfangenen Daten in einem Mikrocomputersystem,
- Fig. 3: einen Empfänger mit Überwachungsschaltung und
- Fig. 4: die Erzeugung eines Umschaltsignals für die Schaltungsanorndung nach Fig. 1.

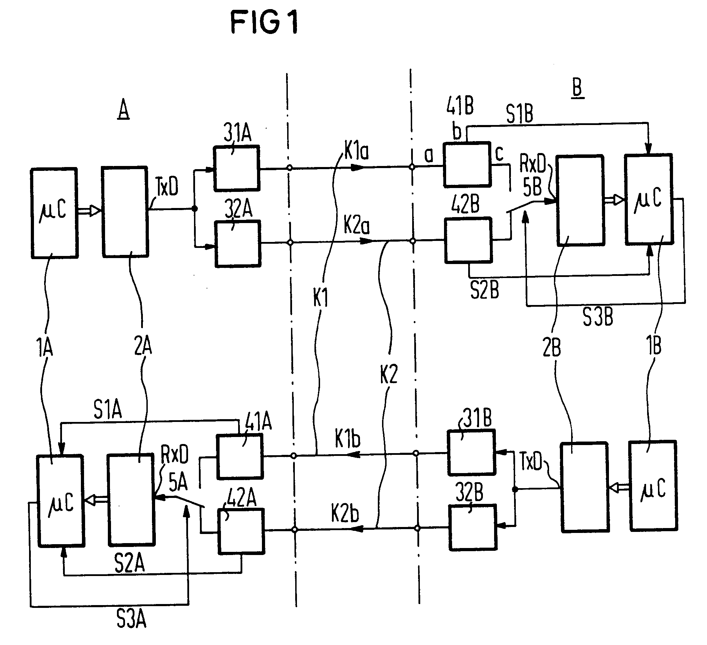

Bei der in Figur 1 gezeigten Schaltungsanordnung werden zwischen den Mikrocomputersystemen 1A und 1B Daten ausgetauscht. Das Mikrocomputersystem 1A ist in der Betriebsstelle A, das Mikrocomputersystem 1B in der Betriebsstelle B angeordnet. Beide Mikrocomputersysteme 1A und 1B sind Signalsammler einer Signalsammeleinrichtung, mit deren Hilfe Signale für eine zentrale Betriebsbeobachtung gesammelt werden.

Beide Signalsammler bzw. Mikrocomputersysteme 1A und 1B tauschen über die beiden Vierdraht-Übertragungskanäle K1 und K2 Informationen miteinander aus.

Die Übertragung der Daten erfolgt in beiden Übertragungsrichtungen in gleicher Weise mit Hilfe von gleichartigen Übertragungs-, Überwachungs- und Verarbeitungsmitteln. Es genügt daher, die Schaltungsanordnung für eine der beiden Übertragungsrichtungen zu beschreiben. Aufbau und Funktion der anderen Übertragungsrichtung ergeben sich dadurch, daß man in der Beschreibung der Übertragungsrichtung A, B in den Bezugszeichen jeweils das "A" durch ein "B" und das "B" durch ein "A" ersetzt.

Das Mikrocomputersystem 1A der Betriebsstelle A ist mit seinem Signalausgang an den HDLC-Controller 2A geführt. Der Ausgang TxD des HDLC-Controllers 2A ist sowohl an den Signaleingang des Senders 31A als auch an den Signaleingang des Senders 32A geführt. Der Sender 31A ist über die eine Richtung des Übertragungskanals K1 an den Empfänger 41B der Betriebsstelle B, der Signalausgang des Senders 32A über die eine Richtung des Übertragungskanals K2 an den Empfänger 42B der Betriebsstelle B geführt. Mit Hilfe des Umschalters 58 läßt sich der Eingang RxD des HDLC-Controllers 2B wahlweise mit dem Ausgang des Empfängers 41B oder des Empfängers 42B verbinden.

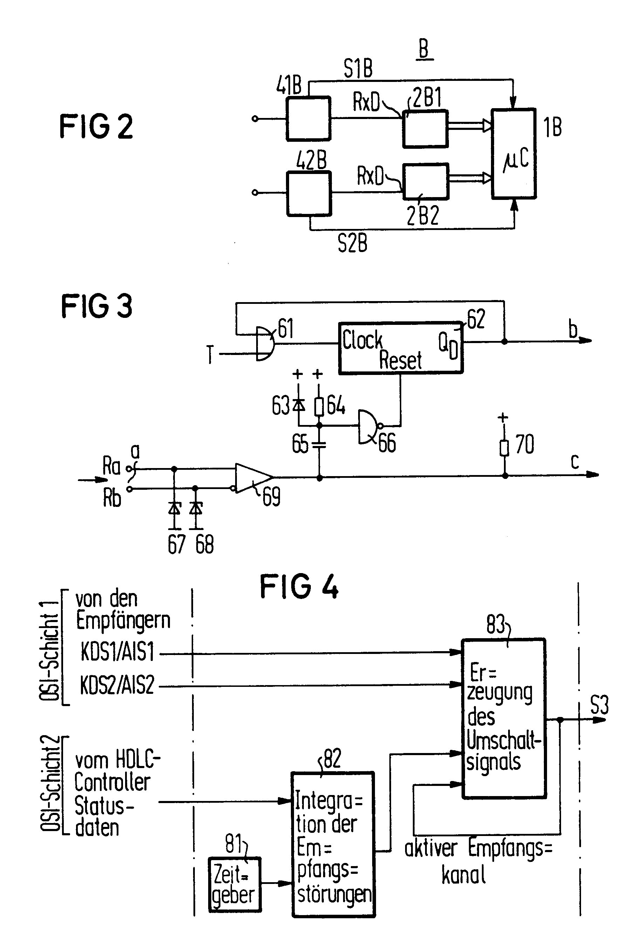

Figur 2 zeigt eine Abwandlung der Schaltungsanordnung nach Figur 1, bei der die Auswahl der empfangenen Daten in der Betriebsstelle B nicht mit Hilfe des in Figur 1 gezeigten Umschalters 5B, sondern mit Hilfe des Mikrocomputersystems 1B selbst vorgenommen wird. In diesem Fall ist jedem der beiden Empfänger 41B und 42B ein eigener HDLC-Controller 2B1 bzw. 2B2 nachgeschaltet. Jeder dieser beiden HDLC-Controller 2B1 und 2B2 ist mit seinem Ausgang über eine eigene Verbindung an das Mikrocomputersystem 1B geführt. In diesem Fall kann man die Qualitätskriterien der Schicht 2 von beiden Empfangskanälen im Mikrocomputersystem miteinander vergleichen und auswerten.

Die in Figur 1 gezeigte Schaltungsanordnung dient zur Übertragung von Datentelegrammen, mit deren Hilfe die zu Signalsammlern gehörenden Mikrocomputer Informationen austauschen.

Im Signalsammel-System erfolgt die Übertragung der Daten zwischen den Betriebsstellen A und B, insbesondere über Digitalsignal-Kanäle mit 64 kbit/s. Vorteilhaft ist weiterhin die Übertragung über frei verwendbare Bits von Digitalsignal Übertragungssystemen, insbesondere über dem nationalen Gebrauch vorbehaltene Bits (Y-Bits, N-Bits) von Digitalsignal-Multiplex-Einrichtungen, insbesondere mit 0,6 ... 19,2 kbit/s unter Verwendung der genannten V.11-Schnittstelle. Ferner kann eine Übertragung mit Hilfe von freien Bytes in Einrichtungen der synchronen digitalen Hierarchie zweckmäßig sein.

Die Schnittstellen der Signalsammler 1A und 1B sind für eine Übertragung der Daten über zwei Übertragungskanäle, vorzugsweise für eine Zwei-Wege-Führung ausgerüstet und mit automatischen Umschalteinrichtungen versehen.

Figur 1 zeigt eine Schaltungsanordnung für eine Zwei-Wege-Datenübertragung zwischen den Signal-Sammeleinrichtungen der Betriebsstelle A und der Betriebsstelle B. Die Sende- und Empfangsrichtung sind getrennt dargestellt. Die getrennt dargestellten aber gleich bezeichneten Funktionsblöcke stellen jeweils eine Einheit dar, z.B. ist der HDLC-Controller 2A bzw. 2B jeweils ein IC. Die Senderichtung von Betriebsstelle A und Betriebsstelle B sind gleich aufgebaut, ebenso die Empfangsrichtung der beiden Stationen.

Die Signalsammler besitzen jeweils für jeden Weg einen eigenen Empfänger mit einer Überwachungseinrichtung, die bei Ausfall des Übertragungskanals ein Signal abgibt.

Beim Telegrammverkehr von Betriebsstelle A nach Betriebsstelle B sendet der HDLC-Controller 2A das Telegramm vom Ausgang TxD über die beiden Sender 31A und 32A auf den Übertragungskanal Kla Weg 1 und Weg K2a aus. Bei ungestörten Kanälen empfangen die Empfänger 41B und 42B die Daten, ihre Meldungsgeber für die Signale S1B und S2B sprechen nicht an. Der Schalter 5B liegt zufallsbedingt am Empfänger 4B, dessen Ausgang damit auf den Dateneingang RxD des HDLC-Controllers 2B geschaltet ist.

Wird der Weg K2a gestört, so spricht das Signal S2B an, das Mikrocomputersystem 1B veranlaßt daraufhin nach entsprechenden weiteren Auswertungen und Abfrage von Zeitkriterien über das Umschaltsignal S3B das Umschalten auf den Weg K1a. Ein weiteres Umschalten erfolgt dann erst nach einer Unterbrechung des Weges K1a.

Es kann andererseits zweckmäßig sein, einen der beiden Wege K1a und K2a als Betriebsweg zu bevorrechtigen. In diesem Fall läuft die Datenübertragung nur solange über den Ersatzweg, wie der Betriebsweg unterbrochen ist.

Weiterhin übergibt der HDLC-Controller 2B mit jedem empfangenen Telegramm Statusdaten über Empfangsstörungen an das Mikrocomputersystem 1B. Daraus bildet das Mikrocomputersystem 1B durch Integration Informationen über die Güte des betreffenden Übertragungskanals. Durch regelmäßiges Umschalten mit Hilfe des Umschalters 5B läßt sich damit für beide Kanäle die Güte überwachen. Das Umschalten erfolgt gesteuert über Zeitkriterien jeweils in einer Zeitlücke zwischen zwei Telegrammen. Während eines Telegramms wird daher nicht umgeschaltet, so daß dieses erhalten bleibt.

Die Integration der Telegrammstörungen erfolgt innerhalb von Zeitfenstern.

Die Rückrichtung des in Figur 1 unten dargestellten Übertragungskanals ist gespiegelt vollkommen gleichartig aufgebaut und in der Funktion ebenfalls vollkommen gleich.

Im Falle einer Verwendung von Digitalsignal-Kanälen mit 64 kbit/s haben die Digitalsignal-Kanäle zweckmäßigerweise G.703-Schnittstellen. Die Sender 31A bis 32B sind in diesem Fall G.703-Schnittstellenumsetzer. Die Signale S1A bis S2B sind dabei Meldungen KDS, d.h. "kein Digitalsignal" und AIS.

Anderseits läßt sich die Zwei-Wege-Datenübertragung über V.11-Schnittstellen zwischen den Signalsammel-Einrichtungen von Betriebsstelle A und Betriebsstelle 8 vornehmen. Über die V.11-Schnittstellen lassen sich in die beiden Wege jeweils verschiedene Übertragungseinrichtungen einschleifen. So ist es insbesondere möglich, die einer nationalen Verwendung vorbehaltenen Y-Bit bzw. N-Bit des Digital-Übertragungssystems Digitalsignal-Multiplexer 34/140 Mbit/s zur Datenübertragung zu verwenden.

Die Sender 31A bis 32B sind in diesem Fall V.11-Schnittstellenumsetzer. Die Signale S1A bis S2B sind Meldungen KDS. AIS-Signale gibt es nicht.

Für die Umsetzung der TTL-bzw. CMOS-Schnittstellen der Datenein- und ausgänge des HDLC-Controllers auf die 64 kbit/s-Schnittstellen entsprechend der CCITT-Empfehlung G.703 kann ein LSI-Baustein dienen. In diesem Baustein sind u.a. die Überwachungsfunktionen "Erkennen eines Ausfalls des ankommenden Digitalsignals" "Erkennen eines AIS-Signals" realisiert. Beide Funktionen werden über ein OR-Gatter verknüpft und dem Mikrocomputersystem zur Auswertung zugeführt.

Da bei Übertragung über die V.11-Schnittstelle kein Kriterium über den Zustand des Übertragungskanals zur Verfügung steht, bildet eine zusätzliche Überwachungsschaltung dieses Signal, indem diese die Signalwechsel auswertet. Hierzu ist es erforderlch, daß in den Pausen zwischen den Telegrammen Signalwechsel auf dem Übertragungskanal auftreten. Dies läßt sich durch Senden von Dauer-Flags in den Pausen erreichen. Eine flankengetriggerte retriggerbare monostabile Kippstufe oder eine Zählerschaltung nach Figur 3 wird durch die Signalwechsel der Empfangsdaten getriggert. Sie fällt bei Ausfall der Empfangsdaten in die Ruhelage, welche dem Zustand "Weg gestört" entspricht.

Figur 3 zeigt ein Ausführungsbeispiel für einen V.11-Empfänger mit Überwachungseinrichtung. Die Anschlüsse dieses Empfängers sind wie in Figur 1 mit a, b und c bezeichnet.

Als Empfänger 69 dient ein z.B. RS422-TTL-Umsetzer IC DS8921. Die Dioden 67 und 68 dienen dem Überspannungsschutz des Eingangs.

Die Überwachungschaltung wird gebildet aus den Bauteilen 61-66. Sie arbeitet als flankengetriggerte retriggerbare monostabile Kippstufe.

Mit dem RC-Glied 64, 65 wird aus jeder negativen Flanke im Bitstrom ein negativer Impuls am Eingang des Schmitt-Triggers 66 gebildet, der einen positiven Reset-Impuls an den Zähler 62 abgibt. Werden der Datenstrom bzw. die Ruhe-Flags unterbrochen, so entfallen die Reset-Impulse, der 2Hz-Takt am Eingang des OR-Gatters 61 schaltet den Zähler 62 weiter, bis dessen Ausgang QD auf log. "1" schaltet, über das OR-Gatter 61 den 2Hz-Takt sperrt und das Signal "Weg gestört" abgibt.

Figur 4 zeigt die Verarbeitung der verschiedenen Eingangsinformationen zur Bildung des Umschaltsignals. Hierbei werden sowohl die Signale KDS1/AIS1 und KDS2/AIS2 (OSI-Schicht 1) als auch Statusinformationen des HDLC-Controllers (OSI-Schicht 2) verarbeitet.

Die Signale KDS1/AIS1 und KDS2/AIS2 (OSI Schicht 1) der Empfänger steuern die Umschaltung direkt, und zwar in der folgenden Weise:
- KDS1/AIS1 und KDS2/AIS2 aus: : kein Umschalten
- KDS1/AIS1 aktiv: : Umschalten auf Empfänger 42B
- KDS2/AIS2 aktiv: : Umschalten auf Empfänger 41B
- KDS1/AIS1 und KDS2/AIS2 aktiv: : kein Umschalten

Als Statusinformationen werden im wesentlichen die Telegrammstörungen vom HDLC-Controller übergeben und im Mikrocomputersystem 1B aufaddiert und pro Zeiteinheit bewertet. Damit läßt sich die Güte der beiden Übertragungskanäle ermitteln und für die Übertragung der bessere Kanal auswählen.

## Patentansprüche

1. Verfahren zum Übertragen von Daten mittels Impulstelegrammen zwischen Signalsammlern einer Signalsammeleinrichtung, die in örtlich voneinander entfernten Betriebsstellen (A, B) einer Digitalsignal-Übertragungseinrichtung angeordnet sind und mit deren Hilfe Signale für eine zentrale Betriebsbeobachtung gesammelt werden, wobei die Teilnehmerstellen über digitale Nachrichtenübertragungsstrecken miteinander verbunden sind, die Sender zum Aussenden und Empfänger zum Empfangen digitaler Signale enthalten,
**dadurch gekennzeichnet**, daß in wenigstens einer Übertragungsrichtung die zwischen den Signalsammlern zu übertragenden Daten zugleich über zwei Übertragungsstrecken (K1, K2) übertragen werden, und daß mit Hilfe einer Auswahlvorrichtung eine der beiden Übertragungsstrecken (K1, K2) für die Übertragung der Daten ausgewählt wird, und daß die von der ausgewählten Übertragungsstrecke übertragenen Daten von einem den Empfängern nachgeschalteten und dem Signalsammler zugeordneten Mikrocomputersystem (1A, 1B) verarbeitet werden und daß von den Empfängern zugeordneten Überwachungsvorrichtungen Überwachungssignale der beiden Übertragungsstrecken dem Mikrocomputersystem zur Auswertung zugeführt werden, und daß das Mikrocomputersystem (1A, 1B) aus den empfangenen Daten eigene Informationen über den Zustand wenigstens jeweils der ausgewählten Übertragungsstrecke gewinnt und die zu den beiden Übertragungsstrecken gehörenden Überwachungssignale, die aus den empfangenen Daten gewonnenen Informationen über den Zustand wenigstens der jeweils ausgewählten Übertragungsstrecke miteinander verknüpft und daß aus dem Ergebnis der Verknüpfung ein Steuersignal (S3, S3A, S3B) gebildet wird, das die Auswahl eines der beiden Empfangssignale bestimmt.

2. Verfahren nach Anspruch 1,
**dadurch gekennzeichnet**,
daß die aus den empfangenen Daten gewonnenen Informationen über den Zustand wenigstens der ausgewählten Übertragungsstrecke mit wenigstens einem Zeitkriterium verknüpft werden.

3. Schaltungsanordnung zum Übertragen von Daten mittels Impulstelegrammen zwischen Signalsammlern einer Signalsammeleinrichtung, die in örtlich voneinander entfernten Betriebsstellen (A, B) einer Digitalsignal-Übertragungseinrichtung angeordnet sind und mit deren Hilfe Signale für eine zentrale Betriebsbeobachtung gesammelt werden, wobei die Teilnehmerstellen über digitale Nachrichtenübertragungsstrecken miteinander verbunden sind, die Sender zum Aussenden und Empfänger zum Empfangen digitaler Signale enthalten, zur Durchführung des Verfahrens nach Anspruch 1 oder 2,
**dadurch gekennzeichnet**, daß in wenigstens einer Ubertragungsrichtung die eine Betriebsstelle (A, B) zwei Sender zur Aussendung der Daten über zwei Übertragungsstrecken enthält, daß in der anderen Betriebsstelle (B, A) die Signalausgänge der beiden Empfänger über eine Auswahlvorrichtung mit einem dem Signalsammler zugeordneten Mikrocomputersystem (1A, 1B) zur Verarbeitung der von der ausgewählten Übertragungsstrecke übertragenen Daten verbunden und den Empfängern Überwachungsvorrichtungen zur Gewinnung von Überwachungssignalen der beiden Übertragungsstrecken zugeordnet sind, daß das Mikrocomputersystem (1A, 1B) an Überwachungssignalausgänge der Überwachungsvorrichtungen angeschlossen ist und aus den empfangenen Daten eigene Informationen über den Zustand wenigstens jeweils der ausgewählten Übertragungsstrecke gewinnt und die zu den beiden Übertragungsstrecken gehörenden Überwachungssignale, die aus den empfangenen Daten gewonnenen Informationen über den Zustand wenigstens der jeweils ausgewählten Übertragungsstrecke miteinander verknüpft und daß aus dem Ergebnis der Verknüpfung ein Steuersignal (S3, S3A, S3B) gebildet wird, mit dessen Hilfe die Auswahlvorrichtung steuerbar ist.

4. Schaltungsanordnung nach Anspruch 3,
**dadurch gekennzeichnet**,
daß den beiden Sendern ein HDLC-Controller (2A, 2B) vorgeschaltet und auf der Empfangsseite dem Dateneingang oder zwei Dateneingängen des Mikrocomputersystems jeweils ein für eine Übertragung von Dauer-Flags geeigneter HDLC-Controller (2A, 28) vorgeschaltet ist.

5. Schaltungsanordnung nach Anspruch 3 oder 4,
**dadurch gekennzeichnet,**
daß zur Übertragung der Daten Digital-Kanäle mit einer Bitrate von 64 kbit/s dienen, und daß die Empfänger der Überwachungs-Vorrichtungen Empfangseinrichtungen für das Empfangen oder Nichtempfangen auswertbarer Digitalsignale und für das Empfangen oder Nichtempfangen eines AIS-Signales enthalten und eine Meldeeinrichtung für die Meldung "kein Digitalsignal" und eine Meldeeinrichtung für die Meldung "AIS-Signal" aufweisen und daß das Mikrocomputersystem an die beiden Meldeausgänge angeschlossen ist.

6. Schaltungsanordnung nach Anspruch 4,
**dadurch gekennzeichnet,**
daß zur Übertragung der Daten die einem nationalen Gebrauch vorbehaltenen bit von digitalen Multiplexsignalen dienen, und daß die Überwachungseinrichtung eine flankengetriggerte retriggerbare monostabile Kippstufe enthält, die die Empfangsrichtung des zugeordneten Übertragungsweges auf Wechsel vom Zustand 1" zum Zustand "0" und/oder auf Wechsel vom Zustand "0" zum Zustand "1" überwacht und bei Fehlen dieser Wechsel die Meldung "kein Digitalsignal" generiert.

7. Schaltungsanordnung nach Anspruch 6,
**dadurch gekennzeichnet**,
daß auf den Übertragungskanälen (K1, K2) im Ruhezustand Dauer-Flags gesendet werden.

8. Schaltungsanordnung nach Anspruch 6 oder 7,
**dadurch gekennzeichnet**,
daß eine die Schaltungsanordnung enthaltende Baueinheit wahlweise mit einer Vorrichtung zur Zwei-Wege-Anschaltung für eine 64 kbit/s Schnittstelle oder für eine Schnittstelle für den nationalen Gebrauch vorbehaltene bit bestückbar ist.

9. Schaltungsanordnung nach einem der Ansprüche 3 bis 7,
**dadurch gekennzeichnet,**
daß zwischen den Datenausgängen der beiden Empfänger 41A, 42A; 41B, 42B) und dem Mikrocomputersystem (1A, 1B) ein Umschalter (5A, 5B) angeordnet ist, mit dessen Hilfe einer von beiden Empfängern mit dem Mikrocomputersystem verbindbar ist.

10. Schaltungsanordnung nach einem der Ansprüche 2 bis 6,
**dadurch gekennzeichnet**,
daß der HDLC-Controller (2A, 2B) Statusdaten über Empfangsstörungen an den Mikrocomputer übergibt und das Mikrocomputersystem daraus, insbesondere durch Integration, Informationen über die Güte des betreffenden Übertragungskanals bildet.

11. Schaltungsanordnung nach Anspruch 8,
**dadurch gekennzeichnet**,
daß durch regelmäßiges Umschalten des Umschalters (5A, 5B) während der Telegrammpausen beide Kanäle überwacht werden.

12. Schaltungsanordnung nach einem der vorhergehenden Ansprüche,
**dadurch gekennzeichnet,**
daß beide Übertragungskanäle (K1, K2) über je einen eigenen HDLC-Controller an das Mikrocomputersystem (1A, 1B) geführt sind.

## Claims

1. Method for transmitting data by means of pulse messages between signal collectors of a signal-collecting device, which are arranged at operating stations (A, B), remote from one another in space, of a digital-signal transmitting device and with the aid of which signals are collected for a central service observation device, the subscriber stations being connected to one another via digital- telecommunication links which contain transmitters for transmitting and receivers for receiving digital signals, characterized in that, in at least one transmission direction, the data to be transmitted between the signal collectors are simultaneously transmitted via two transmission links (K1, K2), and in that, with the aid of a selector device, one of the two transmission links (K1, K2) is selected for transmitting the data, and in that the data transmitted by the selected transmission link are processed by a microcomputer system (1A, 1B) connected downstream of the receivers and assigned to the signal collector, and in that monitoring signals of the two transmission links are fed for evaluation to the microcomputer system by monitoring devices assigned to the receivers, and in that the microcomputer system (1A, 1B) obtains from the received data its own information on the state of at least respectively the selected transmission link, and logically combines with one another the monitoring signals belonging to the two transmission links and the information, obtained from the received data, on the state at least of the respectively selected transmission link, and in that, from the result of the logical combination, a control signal (S3, S3A, S3B) is formed which determines the selection of one of the two received signals.

2. Method according to Claim 1, characterized in that the information, obtained from the received data, on the state of at least the selected transmission link are logically combined with at least one time criterion.

3. Circuit arrangement for carrying out the method according to Claim 1 or 2, for transmitting data by means of pulse messages between signal collectors of a signal-collecting device, which are arranged at operating stations (A, B), remote from one another in space, of a digital-signal transmitting device and with the aid of which signals are collected for a central service observation device, the subscriber stations being connected to one another via digital telecommunication links which contain transmitters for transmitting and receivers for receiving digital signals, characterized in that, in at least one transmission direction, one operating station (A, B) contains two transmitters for transmitting data to transmission links, in that at the other operating station (B, A) the signal outputs of the two receivers are connected via a selector device to a microcomputer system (1A, 1B), assigned to the signal collector, for processing the data transmitted by the selected transmission link, and the receivers are assigned monitoring devices for obtaining monitoring signals on the two transmission links, in that the microcomputer system (1A, 1B) is connected to monitoring signal outputs of the monitoring devices and obtains from the received data its own information on the state of at least respectively the selected transmission link and logically combines with one another the monitoring signals belonging to the two transmission links and the information, obtained from the received data, on the state of at least the respectively selected transmission link, and in that from the result of the logical combination a control signal (S3, S3A, S3B) is formed with the aid of which the selector device can be controlled.

4. Circuit arrangement according to Claim 3, characterized in that a High-level Data Link Controller (2A, 2B) is connected upstream of the two transmitters and, on the receiver side, a High-level Data Link Controller (2A, 2B) suitable for transmitting permanent flags is in each case connected upstream of the data input or of two data inputs of the microcomputer system.

5. Circuit arrangement according to Claim 3 or 4, characterized in that digital channels having a bit rate of 64 kbit/s are used to transmit the data, and in that the receivers of the monitoring devices contain receiving devices for the reception or non-reception digital signals which can be evaluated and for the reception or non-reception of an alarm indication signal, and have a signalling device for the "no digital signal" message and a signalling device for the "Alarm Indication Signal" message, and in that the microcomputer system is connected to the two signalling outputs.

6. Circuit arrangement according to Claim 4, characterized in that the bits of digital multiplex signals which are reserved for national use serve the purpose of transmitting the data, and in that the monitoring device contains an edge-triggered retriggerable monostable multivibrator which monitors the receiving direction of the assigned transmission path for change from the "1" state to the "0" state and/or for change from the "0" state to the "1" state and generates the "no digital signal" message given the lack of these changes.

7. Circuit arrangement according to Claim 6, characterized in that permanent flags are sent on the transmission channels (K1, K2) in the idle condition.

8. Circuit arrangement according to Claim 6 or 7, characterized in that a unit containing the circuit arrangement can optionally be equipped with a device for two-way connection for a 64 kbit/s interface or for an interface for bits reserved for national use.

9. Circuit arrangement according to one of Claims 3 to 7, characterized in that, between the data outputs of the two receivers (41A, 42A; 41B, 42B) and the microcomputer system (1A, 1B), there is arranged a changeover switch (5A, 5B) with the aid of which one of the two receivers can be connected to the microcomputer system.

10. Circuit arrangement according to one of Claims 2 to 6, characterized in that the High-level Data Link Controller (2A, 2B) delivers status data on reception interference to the microcomputer, and from which the microcomputer forms, especially by integration, information on the quality of the relevant transmission channel.

11. Circuit arrangement according to Claim 8, characterized in that the two channels are monitored by regularly switching over the changeover switch (5A, 5B) during the message pauses.

12. Circuit arrangement according to one of the preceding claims, characterized in that the two transmission channels (K1, K2) are passed to the microcomputer system (1A, 1B) via a dedicated High-level Data Link Controller in each case.

## Revendications

1. Procédé pour transmettre des données au moyen de télégrammes d'impulsions entre des unités de collecte de signaux d'un dispositif de collecte de signaux, qui sont disposées dans des postes de service (A,B), qui sont éloignés les uns des autres, d'un dispositif de transmission de signaux numériques, et à l'aide desquels des signaux sont collectés pour une observation centralisée du fonctionnement, les postes d'abonnés étant reliés entre eux par l'intermédiaire de sections numériques de transmission d'informations qui contiennent des émetteurs et des récepteurs pour émettre et recevoir des signaux numériques, caractérisé par le fait que dans au moins un sens de transmission, les données, qui doivent être transmises entre les unités de collecte des signaux, sont transmises simultanément par l'intermédiaire de deux sections de transmission (K1,K2), et qu'à l'aide d'un dispositif de sélection, l'une des deux sections de transmission (K1,K2) est sélectionnée pour la transmission des données, et que les données transmises par la section de transmission sélectionnée sont traitées par un système à micro-ordinateur (1A,1B), qui est branché en aval des récepteurs et est associé à l'unité de collecte de signaux, et que des signaux de contrôle des deux sections de transmission sont envoyés, par les dispositifs de contrôle associés aux récepteurs, au système à micro-ordinateur en vue d'être évalués, et que le système à micro-ordinateur (1A,1B) établit, à partir des données reçues, des informations propres concernant l'état au moins de la section de transmission sélectionnée respective et combine entre eux les signaux de contrôle, qui appartiennent aux deux sections de transmission, et les informations obtenues à partir des données reçues concernant l'état au moins de la section de transmission respectivement sélectionnée, et qu'à partir du résultat de la combinaison est formé un signal de commande (S3, S3A, S3B), qui détermine la sélection de l'un des deux signaux de réception.

2. Procédé suivant la revendication 1, caractérisé par le fait que les informations obtenues à partir des données reçues et concernant l'état au moins de la section de transmission sélectionnée sont combinées à au moins un critère de temps.

3. Montage pour la transmission de données au moyen de télégrammes d'impulsions entre des unités de collecte de signaux d'un dispositif de collecte de signaux, qui sont disposées en des emplacements de fonctionnement (A,B), qui sont éloignés les uns des autres, d'un dispositif de transmission de signaux numériques, et à l'aide desquels des signaux sont collectés pour une observation centralisée du fonctionnement, les postes d'abonnés étant reliés entre eux par l'intermédiaire de sections numériques de transmission d'informations qui contiennent des émetteurs et des récepteurs pour émettre et recevoir des signaux numériques, pour la mise en oeuvre du procédé suivant la revendication 1 ou 2,
caractérisé par le fait que dans au moins un sens de transmission, un poste de service (A,B) contient deux émetteurs pour l'émission de données par l'intermédiaire de deux sections de transmission, que dans l'autre poste de service (B,A), les sorties des signaux des deux récepteurs sont reliées, au moyen d'un dispositif de sélection, à un système à micro-ordinateur (1A,1B) associé à l'unité de collecte des signaux et qui sert à traiter les données transmises par la section de transmission sélectionnée et qu'aux récepteurs sont associés des dispositifs de contrôle servant à obtenir des signaux de contrôle des deux sections de transmission, que le système à micro-ordinateur (1A,1B) est raccordé aux sorties de signaux de contrôle des dispositifs de contrôle et qu'on obtient des informations particulières concernant l'état au moins de respectivement la section de transmission sélectionnée sont obtenues à partir des données reçues, et combine entre eux les signaux de contrôle, qui appartiennent aux deux sections de transmission, et les informations obtenues à partir des données reçues et concernant l'état au moins de la section de transmission respectivement sélectionnée et qu'à partir du résultat de la combinaison est formé un signal de commande (S3,S3A,S3B), à l'aide duquel le dispositif de sélection peut être commandé.

4. Montage suivant la revendication 3, caractérisé par le fait qu'en amont des deux émetteurs est branché un dispositif de commande HDLC (2A,2B) et que sur le côté réception, respectivement un dispositif de commande HDLC (2A, 2B) convenant pour la transmission de drapeaux de durée, est branché en amont de l'entrée de données ou de deux entrées de données du système à micro-ordinateur.

5. Montage suivant la revendication 3 ou 4, caractérisé par le fait que pour la transmission des données, on utilise des canaux numériques possédant une cadence binaire de 64 kbits/s, et que les récepteurs des dispositifs de contrôle contiennent les dispositifs de réception pour la réception ou la non-réception de signaux numériques pouvant être évalués et pour la réception ou la non-réception d'un signal AIS, et possèdent un dispositif de signalisation pour la signalisation "aucun signal numérique" et un dispositif de signalisation pour la signalisation "signal AIS", et que le système à micro-ordinateur est raccordé aux deux sorties de signalisation.

6. Montage suivant la revendication 4, caractérisé par le fait que pour la transmission des données, on utilise les bits, réservés pour une utilisation nationale, de signaux de multiplexage numériques et que le dispositif de contrôle contient un étage à bascule monostable redéclenchable, qui est déclenché par les flancs des impulsions et qui contrôle le sens de réception de la voie de transmission associée pour déterminer s'il se produit un changement de l'état "1" à l'état "0" et/ou un changement de l'état "0" à l'état "1", et, en cas d'absence de ce changement, produit la signalisation "aucun signal numérique".

7. Montage suivant la revendication 6, caractérisé par le fait que dans l'état de repos, des drapeaux permanents sont émis dans les canaux de transmission (K1,K2).

8. Montage suivant la revendication 6 ou 7, caractérisé par le fait qu'une unité de construction contenant le montage peut être équipée au choix d'un dispositif de raccordement à deux voies pour une interface à 64 kbits/s ou pour une interface pour des bits réservés d'une utilisation nationale.

9. Montage suivant l'une des revendications 3 à 7, caractérisé par le fait qu'entre les sorties de données des deux récepteurs (41A,42A,41B,42B) et le système à micro-ordinateur (1A,1B) est disposé un commutateur (5A,5B) à l'aide duquel l'un des deux récepteurs peut être relié au système de micro-ordinateur.

10. Montage suivant l'une des revendications 2 à 6, caractérisé par le fait que le dispositif de commande HDLC (2A,2B) transmet au micro-ordinateur des données d'état concernant des perturbations de réception et le système à micro-ordinateur forme à partir de là, notamment par intégration, des informations concernant la qualité du canal de transmission considéré.

11. Montage suivant la revendication 8, caractérisé par le fait que les deux canaux sont contrôlés au moyen d'une commutation régulière du commutateur (5A,5B) pendant les pauses entre les télégrammes.

12. Montage suivant l'une des revendications précédentes, caractérisé par le fait que les deux canaux de transmission (K1,K2) sont raccordés au système à micro-ordinateur (1A,1B), par l'intermédiaire d'un contrôleur HDLC particulier respectif.
